(19)

Europäisches
Patentamt
European
Patent Office
Office européen
des brevets

(11) **EP 4 546 000 A1**

(12) **EUROPEAN PATENT APPLICATION**

(43) Date of publication:
**30.04.2025  Bulletin 2025/18**

(21) Application number: **23206463.4**

(22) Date of filing: **27.10.2023**

(51) International Patent Classification (IPC):
**G01S 5/02** *(2010.01)*     *G01S 5/12* *(2006.01)*

(52) Cooperative Patent Classification (CPC):
**G01S 5/02213; G01S 5/0268;** G01S 5/0249;
G01S 5/02695; G01S 5/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Universität der Bundeswehr München
85579 Neubiberg (DE)**

(72) Inventor: **The designation of the inventor has not
yet been filed**

(74) Representative: **Lucke, Andreas
Boehmert & Boehmert
Anwaltspartnerschaft mbB
Pettenkoferstrasse 22
80336 München (DE)**

(54) **METHOD AND SYSTEM FOR LOCATING AN EMITTER OF AN ELECTROMAGNETIC SIGNAL**

(57)     Disclosed herein are a system and a method comprising the following steps: receiving an electromagnetic signal emitted by an emitter at two or more receivers of a first plurality of receivers, estimating or determining a first location information which delineates a region in which the emitter is located, wherein the first location information is estimated or determined based on assessing or utilizing a propagation effect of the signal, receiving said signal emitted by an emitter at two or more receivers of a second plurality of receivers, estimating or determining a second location information, based on an assessment of a direction in which the signal is received at said two or more receivers of said second plurality of receivers, wherein said second location information comprises a set or distribution of possible locations of the emitter, estimating or determining a location of the emitter based on a combination of the first location information and the second location information, and providing information on the estimated or determined location of the emitter to a user device or database.

FIG. 2

**Description**

FIELD OF THE INVENTION

The present invention is in the field of locating an emitter of an electromagnetic signal. More particularly, the present invention relates to a method and a system for locating an emitter of an electromagnetic signal, particularly a radio signal.

BACKGROUND OF THE INVENTION

An emitter of an electromagnetic signal, in particular a radio signal, may not actively cooperate and/or its signal characteristics may not be available. This may be due to various reasons, such as illegal operation of the emitter, military activities like GPS interference and radar systems, or an emergency during a catastrophic event. Hence, there is a need for passive geolocation techniques that can accurately localize such unidentified emitters. Potential applications are search and rescue, asset tracking, and in military and defense systems.

Examples for kinematic-based geolocation approaches are Time Difference of Arrival (TDOA) localization and Frequency Difference of Arrival (FDOA) localization which rely on time and frequency measurements, respectively. A further geolocation technique is Angle of Arrival (AOA) localization which is based on measuring the direction in which the signal is received from the target emitter. Each of these techniques has unique advantages and inherent shortcomings. Target ambiguity, accurate satellite altitude knowledge, limited angle resolution, and prolonged observation times can complicate or compromise an accurate localization. More specifically, the accuracy of TDOA/FDOA is limited by time/-frequency synchronization, respectively. In addition, a large distance between the receivers, such as satellites, improves resolution, but may also lead to an invalid measurement when the signal is not received at several receivers within a certain time window. A larger receiver spacing would enable a more accurate position determination with AOA localization. However, so-called grating lobes occur for large receiver distances, i. e. the signal cannot be assigned to one location of the emitter but only to several possible locations. In other words, the localization results can be ambiguous.

Abulasad Elgamoudi et al., A Survey for Recent Techniques and Algorithms of Geolocation and Target Tracking in Wireless and Satellite Systems, Applied Sciences, 11(13), 2021, 6079, is a review on space geolocation techniques of the art. In Yang Zheng Bin et al., Passive satellite localization using TDOA/FDOA/AOA measurements, IEEE Conference Anthology, 1-5, 2013, a combination of AOA and TDOA/FDOA is described. However, common systems and methods do not consider the receivers as an array or network of receivers, particularly a distributed receiver system. Instead, the measurements are carried out and evaluated individually. Further, systems and methods of the art may rely on Phased-Array receivers (i. e. a single receiver comprising multiple antennas) for AOA localization, and inter-receiver distances in the systems and methods of the art may not be optimal. Moreover, synergies emerging between different localization techniques that would allow compensating for inherent limitations may not be exploited.

SUMMARY OF THE INVENTION

A problem underlying the present invention is to provide a method and a system for locating an emitter of an electromagnetic signal, in particular a radio signal, which allows for an improved accuracy and reduced ambiguity in passive geolocation.

This problem is solved by a method according to claim 1 and by a system according to claim 21. Preferable embodiments are defined in the dependent claims.

According to one aspect of the invention, the problem is solved by a method comprising the following steps:

receiving an electromagnetic signal emitted by an emitter at two or more receivers of a first plurality of receivers,

estimating or determining a first location information which delineates a region in which the emitter is located, wherein the first location information is estimated or determined based on assessing or utilizing a propagation effect of the signal,

receiving said signal emitted by an emitter at two or more receivers of a second plurality of receivers,

estimating or determining a second location information, based on an assessment of a direction in which the signal is received at said two or more receivers of said second plurality of receivers, wherein said second location information comprises a set or distribution of possible locations of the emitter,

estimating or determining a location of the emitter based on a combination of the first location information and the second location information, and

providing information on the estimated or determined location of the emitter to a user device or database.

Note that the receivers comprise means for detecting, measuring, assessing, and/or processing the electromagnetic signal which may be any of visible light, radio waves, or other kinds of electromagnetic signals. Also note that the receivers may be linked for synchronization and data exchange. The processing may be performed on-board (e. g. in a distributed modality or by a master receiver).

In a preferred embodiment, said electromagnetic signal emitted by the emitter or signal source is a radio signal or radio wave. Accordingly, in a preferred embodiment, each receiver of the first plurality of receivers and of the second plurality of receivers comprises an antenna to receive, detect, or measure the signal emitted by the emitter or signal source. Note that calculations and signal recording may be performed by a software-defined radio (e. g. FPGA, ASICS, or microcontroller). Also note that the two or more receivers of the first plurality of receivers and the two or more receivers of the second plurality of receivers have known locations. The location of a receiver can generally be expressed as a vector (e.g. $p_n = [x_n, y_n, y_n]$) in Cartesian coordinates with $x$-, $y$-, and $z$-components or in spherical coordinates (e. g. with a radius $r$, azimuth angle $\theta$, and elevation angle $\phi$ component). Also note that two receivers in the first plurality receivers and two receivers in the second plurality of receivers are sufficient for estimating or determining the location of the emitter in case the emitter is expected to be located on the ground. Otherwise, more than two receivers in each plurality of receivers are used. More preferably, three or more receivers are used in the first plurality of receivers, and even more preferably, four or more receivers are used in the first plurality of receivers to facilitate localization in three dimensions.

Note that utilizing a propagation effect of the signal for estimating or determining the first location information may generally refer to the use or assessment of differences in propagation time and/or frequency of the signal when the signal is received at receivers of the first plurality of receivers. Accordingly, in a preferred embodiment, said first location information is estimated or determined based on a difference in propagation time and/or phase of the signal received at said two or more receivers of said first plurality of receivers. Note that the electromagnetic signal can be represented, for example, in the Narrowband-Equivalent-Lowpass-Signal (ELPS) Model as a function of

(i) the received signal,
(ii) a Doppler shift component,
(iii) a time delay component,
(iv) the emitted signal whose characteristics remain undefined,
(v) a complex exponential component that introduces phase alterations within the signal, and
(vi) a Gaussian random noise component.

However, note that electromagnetic signal is not limited to Narrow-Band Signals. In a related embodiment, the signal can be expressed in the ELPS Model by the following Equation 1,

$$[\text{Equation 1}]$$

$$r(t) = e^{j\alpha}e^{-i\omega_d t}s(t - \tau_d) + \varepsilon,$$

wherein the received signal is denoted by $r(t)$, the parameter $\omega_d$ is associated with a Doppler shift, the parameter $\tau_d$ is associated with a time delay, the emitted signal remains unknown and is represented by $s(t)$, the term $e^{j\alpha}$ signifies the complex exponential component that introduces phase alterations within the signal, and the Gaussian random noise component is characterized by $\varepsilon$.

According to the invention, the second location information is estimated or determined by assessing the direction from which the electromagnetic signal, such as a radio wave, arrives at said two or more receivers of said second plurality of receivers. More specifically, the angle (which is related to the phase differences at the individual receivers) or bearing of the signal emitter may be calculated relative to said receivers, allowing for the estimation or determination of the emitter's location.

Note that the location of the emitter can be expressed, for example, as a vector $p_e$ in Cartesian coordinates with $x$-, $y$-, and z-components (e. g. $p_e = [x_e, y_e, z_e]$) or in spherical coordinates (e. g. with radius $r$, azimuth angle $\theta$, and elevation angle $\phi$ component).

According to the invention, the first location information delineates - in particular, confines, defines, or delimits - a region in which the emitter is located. In a preferred embodiment, the first location information comprises a location parameter and an error margin parameter to delineate or confine the region in which the emitter is located. In yet another embodiment, the location parameter comprises the azimuth angle $\theta_{\text{TDOA/FDOA}}$ and/or elevation angle $\phi_{\text{TDOA/FDOA}}$

obtained by TDOA and/or FDOA localization and the error margin parameter comprises the associated error margin of the azimuth angle $\Delta\theta_{TDOA/FDOA}$ and/or the error margin of the elevation angle $\Delta\phi_{TDOA/FDOA}$.

According to the invention, the second location information comprises, in the simplest case, a set of possible locations of the emitter. Additionally, or alternatively, the second location information has a quantitative component, and represents a distribution, a probability map, or a power density pattern of possible locations of the emitter. A distribution of possible locations is also referred to as spatial spectrum in the art.

According to the invention, combining the first location information and the second location information may refer to one or more of comparing, correlating, joining, associating, overlapping, and matching said first location information and said second location information. For example, the region delineated by the first location information may be one or more of compared, correlated, joined, associated, overlapped, and matched with a location in the set or distribution of possible locations comprised in the second location information. In other words, the first location information is used to identify or to select a location from the plurality of possible locations comprised in or designated by the second location information. The selected location and the delineated region are then joined to provide a joint estimation or determination of the location of the emitter. Thereby, the location of the emitter can be estimated or determined.

In more detail, according to a related embodiment, the second location information comprises a set of possible locations. In that case, a location out of the set of possible locations that lies within the region delineated by the first location information is selected. Additionally, or alternatively, the second location information comprises a distribution of possible locations. Hence, in a preferred embodiment, a maximum or peak (intensity) may then be searched or identified in the distribution of possible locations (e. g. the spatial spectrum in the art) within a parameter space or solution space that corresponds to the region delineated or confined by the first location information. Note that the achievable resolution and spacing of the receivers of the first plurality of receivers and of the second plurality of receivers are chosen such that preferably only one possible location can be found within the estimated or determined region delineated by the first location information.

Increasing the distances between the receivers, particularly between the receivers of the second plurality of receivers, can lead to an improvement in resolution, i. e. an enhanced precision in estimating or determining each possible location of the emitter. Hence, the receivers of the second plurality of receivers are spaced apart at a distance (e. g. by several meters to several kilometers depending on the frequency, and more particularly, by 2 m or more, by 5 m or more, by 10 m or more, by 20 m or more, by 50 m or more, by 100 m or more, by 500 m or more, by 1 km or more, and by 50 km or less, by 20 km or less, or by 10 km or less) such that an increased accuracy in estimating or determining the possible locations of the emitter is facilitated. However, as a downside, this resolution gain introduces a challenging issue: the formation of so-called grating lobes, which generates location ambiguity. In other words, the signal cannot be assigned to exactly one location but to several possible locations, which, however, are individually narrowed down more precisely. According to the invention, this ambiguity arising from said grating lobes is addressed or mitigated by use of the combination of the first location information and the second location information. The first location information confines the possible search space for the second location estimation or determination to mitigate ambiguity. This way, the location of the emitter can be estimated or determined more accurately. Moreover, the receiver distance for the estimation or determination of the first location information (e. g. obtained by use of TDOA/FDOA localization) could be chosen smaller than optimal since combining the first location information and the second location information can mitigate the associated loss in accuracy. Thereby, a level of accuracy similar to a constellation with larger receiver distances (but without combination of the first location information and the second location information) can be achieved even though smaller receiver distances are used. This way, the probability that the signal is detected at most or all receivers of the first plurality of receivers can be increased, which overall increases the robustness of the localization method.

According to the present invention, the information on the estimated or determined location of the emitter is then provided to a user device or database. Said user device or database may be located on the ground, on an aircraft, or on a seacraft. Additionally, or alternatively, said user device or database may be, may comprise, or may be part of an on-board processor/system. Note that the information can be provided to the user device or database using common communication methods as known in the art. Typical examples for wireless communication would be L-band, C-band, S-band, and Ku-band communication.

The user device or database may store, process, and/or display the provided information. The provided information may be processed by the user device or database in order to steer or deploy a rescue unit and/or an interception unit. Accordingly, in a preferred embodiment, the method further comprises deploying a rescue unit or an interception unit according to the provided information on the estimated or determined location of the emitter. Further use cases would be GNSS-Interference detection, mission briefing, or red/blue force tracking.

In a preferred embodiment, said first location information is estimated or determined as a function of a difference in time of arrival of the signal received at said two or more receivers of said first plurality of receivers. Additionally, or alternatively, said first location information is estimated or determined as Doppler shift in frequency of the signal received at said two or more receivers of said first plurality of receivers.

According to a preferred embodiment, said first location information is estimated or determined by use of Time Difference of Arrival (TDOA) localization as *per se* known in the art. TDOA localization is a method for estimating or determining the location of a signal emitter using multiple receivers or sensors. When the signal reaches the receivers at different times due to varying distances between the emitter and each receiver, each receiver records the time of arrival (TOA) of the signal using high-precision timekeeping equipment, such as atomic clocks or quartz crystal oscillators, and the corresponding time differences of arrival (TDOAs) are calculated. This way, the distances between the emitter and the receivers can be estimated or determined. More specifically, in an embodiment, temporal disparity measurements among signal arrivals at different receiver locations can be conducted. Herein, the principle of TDOA localization capitalizes on the *a priori* knowledge of the receiver positions. In an example, each receiver position can be expressed as a vector $p_n = [x_n, y_n, y_n]$, with the index n denoting the number of the receiver. In an embodiment, the spatial coordinates of the signal emitter are obtained through the mechanism of hyperbolic localization, which can be achieved via the intersection of hyperbolic curves. For example, according to yet another embodiment, the location of the emitter can be represented by a vector $p_e$ as indicated above and as described in Mark L. Fowler and Xi Hu. Signal models for TDOA/FDOA estimation, IEEE Transactions on Aerospace and Electronic Systems, 44(4):1543-1550, 2008. For example, in a preferred embodiment, the TDOA between a first and a second receiver of the first plurality of receivers can be expressed as function of

(i) the distance between the emitter and the first receiver,
(ii) the distance between the emitter and the second receiver,
(iii) the location of the first receiver,
(iv) the location of the second receiver,
(v) the location of the emitter, and
(vi) the speed of light.

In yet another embodiment, the TDOA between the first and the second receiver of the first plurality of receivers can be expressed as $\tau_{12}$ and defined by the following Equation 2,

[Equation 2]

$$\tau_{12} = \frac{R_1 - R_2}{c} = \frac{1}{c} \left( \| p_1 - p_e \| - \| p_2 - p_e \| \right),$$

wherein $\tau_{12}$ is the TDOA between the first and the second receiver, $R_1$ is the distance between the emitter and the first receiver, $R_2$ is the distance between the emitter and the second receiver, $p_1$ is the location of the first receiver, $p_2$ is the location of the second receiver, $p_e$ is the location of the emitter, the speed of light is denoted as c, and the Euclidean norm is expressed as $\| \cdot \|$.

In a preferred embodiment, said first location information is estimated or determined by use of Frequency Difference of Arrival, FDOA, localization as known in the art. FDOA localization is a technique used to determine the location of an emitter by analyzing the frequency variations observed across multiple receivers, and in particular, by analyzing differences in the carrier frequency of the signal received by multiple receivers. FDOA localization is commonly applied in scenarios where time-based methods like TDOA localization are reduced in effectivity or may not be effective, e. g. when the emitted electromagnetic signal is a continuous waveform and the signal timing is uncertain. FDOA localization facilitates estimating or determining the emitter's location by comparing the variations in the received frequency at different receivers. More specifically, FDOA localization exploits the intrinsic properties of the Doppler effect, which induces a frequency shift when a signal-emitting entity moves relative to an observer. For example, in a preferred embodiment, the observer's or receiver's motion can be represented as motion vector (e.g. $\upsilon_n = [v_{x_n}, v_{y_n}, v_{z_n}]$) and the FDOA between the first and the second receiver of the first plurality of receivers can be expressed as a function of

(i) the center frequency of the signal,
(ii) the distance between the emitter and the first receiver,
(iii) the distance between the emitter and the second receiver,
(iv) the location of the first receiver,
(v) the location of the second receiver
(vi) the location of the emitter,
(vii) the motion vector of the first receiver,
(viii) the motion vector of the second receiver, and
(ix) the speed of light.

In an embodiment, the FDOA between the first and the second receiver comprised in the first plurality of receivers can be defined by the following Equation 3,

[Equation 3]

$$v_{12} = \frac{f_e}{c} \frac{d}{dt}(R_1 - R_2) = \frac{f_e}{c}\left[\frac{(\boldsymbol{p_1} - \boldsymbol{p_e})\boldsymbol{v_1}^{\mathrm{T}}}{\|\boldsymbol{p_1} - \boldsymbol{p_e}\|} - \frac{(\boldsymbol{p_2} - \boldsymbol{p_e})\boldsymbol{v_2}^{\mathrm{T}}}{\|\boldsymbol{p_2} - \boldsymbol{p_e}\|}\right],$$

wherein $v_{12}$ is the FDOA between the first and the second receiver, $f_e$ is the center frequency of the signal, $R_1$ is the distance between the emitter and the first receiver, $R_2$ is the distance between the emitter and the second receiver, $\boldsymbol{p_1}$ is the location of the first receiver, $\boldsymbol{p_2}$ is the location of the second receiver, $\boldsymbol{p_e}$ is the location of the emitter, $v_1$ is the motion vector of the first receiver, $v_2$ is the motion vector of the second receiver, the speed of light is denoted as c, the Euclidean norm is expressed as $\|\cdot\|$, and the transpose of a vector or matrix is expressed by the capital letter T in the exponent.

In a preferred embodiment, said first location information is estimated or determined by use of combined TDOA localization and FDOA localization. This way, the first location information, and more particularly, the region in which the emitter is located, can be estimated or determined more accurately.

According to a preferred embodiment, said second location information is estimated or determined by use of Angle of Arrival, AOA, localization. Note that AOA localization determines the direction of an emitter of a signal using multiple receivers. The receivers measure the incoming signal's angles, and the intersection of these angles provides the emitter's direction. Typical receivers suitable for AOA localization comprise antenna arrays that measure signal angles through phase and amplitude differences, $\lambda/2$ antenna arrays (i.e. compact arrays of antennas which are not largely distributed), rotating antennas, cameras or stereo vision systems that determine the angle of visual cues, and magnetometers that measure electromagnetic field orientation.

In a preferred embodiment, the error margin parameter included in the first location information is estimated or determined as a function of a difference in time of arrival and a therewith associated first noise parameter of the signal received at said two or more receivers of said first plurality of receivers. According to a related embodiment, the error margin parameter is estimated or determined as a function of a Doppler shift in frequency and a therewith associated second noise parameter of the signal received at said two or more receivers of said first plurality of receivers. In a preferred embodiment, said error margin parameter is estimated or determined as a function of the first noise parameter, the second noise parameter, the difference in time of arrival, and the Doppler shift in frequency of the signal received at said two or more receivers of said first plurality of receivers.

Note that the error margin parameter can be estimated or determined using mathematical models or algorithms for statistical analysis. For example, Cramer-Rao Lower Bound (CRLB) analysis, can be used to calculate a theoretical bound. CRLB analysis can be used to evaluate the best achievable performance given a specific SNR, which makes it suitable for performance analysis. Other options would be Monte Carlo methods, Bayesian analysis, and Mean Square Error analysis. In particular, an algorithm could be employed for estimating or determining a lower bound for said error margin parameter. Accordingly, in a preferred embodiment, said error margin parameter is estimated or determined based on or utilizing CRLB analysis. The CRLB represents a fundamental limit on the variance that can be achieved by an unbiased estimator. It can serve as a benchmark for evaluating the estimation accuracy and can provide valuable insights into the performance of the estimation process.

For example, in an embodiment, the error margin parameter can be based on the CRLB of the location of the emitter obtained from joint TDOA and FDOA localization.

According to an embodiment, the CRLB analysis first involves determining the individual standard deviations for time $\tau$ and frequency $f$, wherein these limits are valid for an "unbiased optimal estimator". As described in S. Stein. Differential delay/Doppler ML estimation with unknown signals. IEEE Transactions on Signal Processing, 41(8):2717-2719, 1993, the individual noise parameters for calculating the CRLB can be expressed as the bounds of the standard deviation of time and frequency which depend on the bandwidth, the integration time and the signal noise ratio (SNR). Accordingly, in a related embodiment, the first noise parameter $\sigma_\tau$ associated with the difference in time of arrival r and the second noise parameter $\sigma_v$ associated with the Doppler shift in frequency $v$ can be expressed as function of

(i) a "noise bandwidth at receiver input",
(ii) an "rms integration time", and
(iii) an effective input signal noise ratio.

Herein, the "noise bandwidth at receiver input" can be obtained as a function of the signal, and the "rms integration time" can be obtained as a function of the signal power density spectrum as described in S. Stein. Algorithms for ambiguity function processing. IEEE Transactions on Acoustics, Speech, and Signal Processing, 29(3):588-599, 1981. In yet a further embodiment, the first noise parameter $\sigma_\tau$ associated with the difference in time of arrival $\tau$ can be expressed by the following Equation 4 and the second noise parameter $\sigma_v$ associated with the Doppler shift in frequency $v$ can be expressed by the following Equation 5,

[Equation 4]

$$\sigma_\tau \geq \frac{1}{2\pi\sqrt{2}\,B\,\sqrt{B\,T\,SNR}},$$

[Equation 5]

$$\sigma_v \geq \frac{1}{2\pi\sqrt{2}\,T\,\sqrt{B\,T\,SNR}},$$

wherein $B$ denotes the "noise bandwidth at receiver input", $T$ denotes the "rms integration time", and SNR denotes the effective input signal noise ratio. According to an embodiment, the "noise bandwidth at receiver input" $B$ can be found with the following Equation 6,

[Equation 6]

$$B^2 = \frac{\int f^2\,|S(f)|^2 df}{\int |S(f)|^2 df},$$

and the "rms integration time" $T$ can be found with the following Equation 7,

[Equation 7]

$$T^2 = \frac{\int t^2\,|s(t)|^2 dt}{\int |s(t)|^2 dt},$$

wherein the signal is represented by $s(t)$ and $S(f)$ is the signal power density spectrum as described in S. Stein. Algorithms for ambiguity function processing. IEEE Transactions on Acoustics, Speech, and Signal Processing, 29(3):588-599, 1981.

Next, a measurement matrix can be defined in order to calculate the CRLB. As described in Mark L. Fowler and Xi Hu. Signal models for TDOA/FDOA estimation, IEEE Transactions on Aerospace and Electronic Systems, 44(4):1543-1550, 2008, the measurement matrix can capture the relationships between the observed measurements and the parameters to be estimated. It maps the parameters of interest onto the measured quantities, allowing for the extraction of relevant information and subsequent estimation. In an embodiment, the measurement matrix can be based on

(i) the FDOAs between the receivers as a function of the location of the emitter,
(ii) the TDOAs between the receivers as a function of the location of the emitter,
(iii) the center frequency of the emitted signal.

In yet a further embodiment, the measurement matrix **H** can be represented by the following Equation 8,

[Equation 8]

$$\mathbf{H} \triangleq \begin{bmatrix} \frac{\partial \tau_{12}(\boldsymbol{p}_e)}{\partial x_e} & \frac{\partial \tau_{12}(\boldsymbol{p}_e)}{\partial y_e} & \frac{\partial \tau_{12}(\boldsymbol{p}_e)}{\partial z_e} & \frac{\partial \tau_{12}(\boldsymbol{p}_e)}{\partial f_e} \\ \frac{\partial v_{12}(\boldsymbol{p}_e)}{\partial x_e} & \frac{\partial v_{12}(\boldsymbol{p}_e)}{\partial y_e} & \frac{\partial v_{12}(\boldsymbol{p}_e)}{\partial z_e} & \frac{\partial v_{12}(\boldsymbol{p}_e)}{\partial f_e} \\ \vdots & \vdots & \vdots & \vdots \\ \frac{\partial \tau_{1N}(\boldsymbol{p}_e)}{\partial x_e} & \frac{\partial \tau_{1N}(\boldsymbol{p}_e)}{\partial y_e} & \frac{\partial \tau_{1N}(\boldsymbol{p}_e)}{\partial z_e} & \frac{\partial \tau_{1N}(\boldsymbol{p}_e)}{\partial f_e} \\ \frac{\partial v_{1N}(\boldsymbol{p}_e)}{\partial x_e} & \frac{\partial v_{1N}(\boldsymbol{p}_e)}{\partial y_e} & \frac{\partial v_{1N}(\boldsymbol{p}_e)}{\partial y_e} & \frac{\partial v_{1N}(\boldsymbol{p}_e)}{\partial f_e} \end{bmatrix},$$

wherein N denotes the total number of receivers involved in the TDOA/FDOA measurement, $\tau_{12}$ is the TDOA between the first and the second receiver, $\tau_{1N}$ is the TDOA between the first and the N-th receiver, $\upsilon_{12}$ is the FDOA between the first and the second receiver, $\upsilon_{1N}$ is the FDOA between the first and the N-th receiver, $\boldsymbol{p_e}$ is the location of the emitter, and $f_e$ is the center frequency of the emitted signal. As described in Mark L. Fowler and Xi Hu. Signal models for TDOA/FDOA estimation, IEEE Transactions on Aerospace and Electronic Systems, 44(4):1543-1550, 2008, the CRLB for the estimation or determination of the first location information can then be calculated as a function of a diagonal matrix comprising the noise parameters which are assumed as independent, wherein the diagonal matrix is the inverse of the information matrix of **H**.

In a related embodiment, the diagonal matrix is based on the first noise parameter associated with the difference in time of arrival and/or the second noise parameter associated with the Doppler shift in frequency. In a related embodiment, the CRLB for the estimation or determination of the first location information can be expressed by the following Equation 9,

[Equation 9]

$$\text{CRLB}_{\text{TDOA/FDOA}}(\boldsymbol{p_e}) = \left[\mathbf{H}^{\text{T}}\,\mathbf{Q}^{-1}\,\mathbf{H}\right]^{-1},$$

wherein **Q** is the diagonal matrix which has a rank 2*N* and can be represented by the following Equation 10,

[Equation 10]

$$\mathbf{Q} = \begin{bmatrix} \sigma_{\tau_{12}}^2 & 0 & 0 & 0 & 0 \\ 0 & \sigma_{\upsilon_{12}}^2 & 0 & 0 & 0 \\ 0 & 0 & \ddots & 0 & 0 \\ 0 & 0 & 0 & \sigma_{\tau_{1N}}^2 & 0 \\ 0 & 0 & 0 & 0 & \sigma_{\upsilon_{1N}}^2 \end{bmatrix},$$

wherein $\sigma_{\tau 12}$ is the first noise parameter associated with the difference in time of arrival $\tau_{12}$ between the first and the second receiver and can be determined by use of Equation 4 above, $\sigma_{\upsilon 12}$ is the second noise parameter associated with the Doppler shift in frequency $\upsilon_{12}$ between the first and the second receiver and can be determined by use of Equation 5 above, and so forth.

The error margin parameter can then be based on the lower bound for the variance of the emitter's location in Cartesian coordinates established by the CRLB of the emitter's location in Cartesian coordinates obtained from TDOA and/or FDOA localization. In a related embodiment, the error margin parameter is based on the lower bound of the variance of the location of the emitter in Cartesian coordinates expressed by the following Equation 11,

[Equation 11]

$$\text{var}(x_e, y_e, z_e) \geq \text{diag}\left(\text{CRLB}_{\text{TDOA/FDOA}}(\boldsymbol{p_e})\right).$$

Note that var($x_e$,$y_e$,$z_e$) in Equation 11 may include or may be related to the diagonal components of the covariance matrix of the location of the emitter $\boldsymbol{p_e}$. Trigonometric relationships facilitate the conversion from Cartesian (e. g. a vector comprising the x, y, and z-components) to spherical coordinates (e. g. an angle vector comprising the azimuth angle and elevation angle component). An example for this conversion is shown in the following Equation 12,

[Equation 12]

$$\boldsymbol{\vartheta}_e = \begin{bmatrix} \theta_{\text{TDOA/FDOA}} \\ \phi_{\text{TDOA/FDOA}} \end{bmatrix} = \begin{bmatrix} \arccos\frac{z}{\sqrt{x^2+y^2+z^2}} \\ \text{sgn}(y)\arccos\frac{x}{\sqrt{x^2+y^2}} \end{bmatrix},$$

wherein $\vartheta_e$ is the location parameter or angle comprising the azimuth angle $\theta_{\text{TDOA/FDOA}}$ and the elevation angle

$\phi_{\text{TDOA/FDOA}}$ obtained by TDOA and/or FDOA localization. According to an embodiment, a variable transformation can be performed as described in F. Guo, Space Electronic Reconnaissance: Localization Theories and Methods, Wiley, 2014, in order to convert the reference frame from Cartesian to spherical coordinates. According to an embodiment, a mapping rule can be used to convert the Cartesian coordinates into spherical coordinates. For this, the partial derivatives of the CRLB of the emitter location in Cartesian coordinates can be taken with respect to each of the emitter coordinates (e. g. $x_e$, $y_e$, and $z_e$) and subsequently summed up. In yet a further embodiment, the variable transformation can be expressed by the following Equation 13,

[Equation 13]

$$\text{CRLB}_{\text{TDOA/FDOA}}(\boldsymbol{\vartheta}_e) = \frac{\partial \boldsymbol{\vartheta}_e}{\partial(x_e, y_e, z_e)}^{\text{T}} \text{CRLB}_{\text{TDOA/FDOA}}(\boldsymbol{p}_e) \frac{\partial \boldsymbol{\vartheta}_e}{\partial(x_e, y_e, z_e)}.$$

In an embodiment, the error margin parameter is based on the variance of the angle, which is lower bounded by the CRLB of the emitter location in spherical coordinates obtained by TDOA and/or FDOA localization. In yet a further embodiment, the error margin parameter is based on the variance of the angle $\vartheta_e$ (comprising the variance or error margin of the azimuth angle $\Delta\theta_{\text{TDOA/FDOA}}$ and the variance or the error margin of the elevation angle $\Delta\phi_{\text{TDOA/FDOA}}$) and can be expressed by the following Equation 14,

[Equation 14]

$$\text{var}\left(\theta_{\text{TDOA/FDOA}}, \phi_{\text{TDOA/FDOA}}\right) \geq \text{diag}\left(\text{CRLB}_{\text{TDOA/FDOA}}(\boldsymbol{\vartheta}_e)\right).$$

This way, the region within which the emitter is located can be delineated in spherical coordinates.

According to a preferred embodiment, the method for locating the emitter of the electromagnetic signal further comprises, before the step of estimating or determining said second location information, positioning said two or more receivers of said second plurality of receivers according to the error margin parameter.

Note that positioning may refer to verifying the current position of said two or more receivers of said second plurality of receivers and/or to adjusting the position of said two or more receivers of said second plurality of receivers. The error margin parameter could then be used to determine the adjusted or updated position. This way, said two or more receivers of the second plurality of receivers can be brought in optimal position for estimating or determining the second location information, whereby the overall accuracy for estimating or determining the location of the emitter can be increased.

Accordingly, in a preferred embodiment, said second plurality of receivers are positioned away from each other at a maximum distance estimated or determined as a function of the error margin parameter. In a related embodiment, said maximum distance is estimated or determined by dividing the wavelength of the signal by the sine of the error margin parameter. The wavelength of the signal can be estimated or determined as a function of the center frequency or the carrier frequency of the signal (i.e. $\lambda = c / f_e$, wherein c is the velocity of light). Accordingly, in a preferred embodiment, the inter-receiver distance $l_1$ between the two or more receivers of the second plurality of receivers fulfills the following Equation 15,

[Equation 15]

$$l_1 \leq \frac{\lambda}{\sin(\Delta\theta_{\text{TDOA/FDOA}})},$$

wherein $\lambda$ is the wavelength of the electromagnetic signal and $\Delta\theta_{\text{TDOA/FDOA}}$ is the error margin parameter of the azimuth angle. The elevation angle $\phi_{\text{TDOA/FDOA}}$ is handled accordingly, albeit utilizing the error margin parameter $\Delta\phi_{\text{TDOA/FDOA}}$ associated with the elevation angle $\phi_{\text{TDOA/FDOA}}$ instead of the error margin parameter $\Delta\theta_{\text{TDOA/FDOA}}$ associated with the azimuth angle $\theta_{\text{TDOA/FDOA}}$. According to an embodiment, the inter-receiver distance between the two or more receivers of the second plurality of receivers can fulfill the Equation 15 above calculated with the error margin parameter associated with the azimuth angle or calculated with the error margin parameter associated with the elevation angle. In yet another embodiment, an inter-receiver distance in one direction (e.g. in y-direction) between the two or more receivers of the second plurality of receivers can fulfill the Equation 15 above calculated with the error margin parameter associated with the azimuth angle, and an inter-receiver distance in another direction (e.g. in x-direction) between the two or more receivers of the second plurality of receivers can fulfill the Equation 15 above calculated with the error margin parameter associated with the elevation angle. This way, the accuracy of estimating or determining the second location information can be enhanced or optimized.

The accuracy in estimating or determining the possible locations of the emitter is improved when the receiver distances between the two or more receivers of the second plurality of receivers are greater than half the wavelength of the signal. Accordingly, in a preferred embodiment, said two or more receivers of said second plurality of receivers are spaced further apart than half of the wavelength of the signal. Accordingly, in a related embodiment, the inter-receiver distance $l_1$ between the two or more receivers of the second plurality of receivers fulfills the following Equation 16,

[Equation 16]

$$l_1 > \frac{\lambda}{2},$$

wherein $\lambda$ is the wavelength of the electromagnetic signal. This, however, leads to an ambiguity, i. e. the occurrence of grating lobes, which is mitigated by the combination or interplay of the different detection techniques, i. e. by combining the first location information and the second location information.

In a preferred embodiment, the two or more receivers of said second plurality of receivers are spaced further apart than half of the wavelength of the signal and equal to or smaller than the maximum distance estimated or determined by dividing the wavelength of the signal by the sine of the error margin parameter. Accordingly, in yet a further embodiment, the inter-receiver distance $l_1$ between the two or more receivers of the second plurality of receivers fulfills the following Equation 17,

[Equation 17]

$$\frac{\lambda}{2} < l_1 \leq \frac{\lambda}{\sin(\Delta\theta_{\text{TDOA/FDOA}})},$$

wherein $\lambda$ is the wavelength of the electromagnetic signal and $\Delta\theta_{\text{TDOA/FDOA}}$ is the azimuth angle component of the error margin parameter. Thereby, the accuracy of estimating or determining the second location information can be enhanced or optimized.

In a preferred embodiment, said first plurality of receivers moves in formation. In a preferred embodiment, said second plurality of receivers moves in formation. In a preferred embodiment, both the first plurality of receivers move in formation and the second plurality of receivers move in formation. Accordingly, in a related embodiment, the first plurality of receivers and the second plurality of receivers form a network or array of receivers which together move in formation. The acceleration, velocity, and/or direction of movement of the receivers may be known.

According to a preferred embodiment, said first plurality of receivers and said second plurality of receivers form a network of at least four receivers, preferably of at least seven receivers. This way, a formation of receivers in the first plurality of receivers with substantial inter-receiver distances or separations, e. g. spanning several tens of kilometers, can be used, which facilitates creating a large receiver aperture. This allows generating a narrow main beam and improves localization accuracy in all three dimensions without cross-track, latitudinal, or longitudinal symmetry. In more general words, the capability of resolving situations is improved in which the emitter is close to the midline between two receivers (i. e. close to the line perpendicular to and in the middle of the baseline connecting two receivers). Thereby, the accuracy for estimating or determining the first location information, in particular the predefined solution space for TDOA/FDOA, can be enhanced, and an unique estimation or determination of the first location information can be achieved with a single snapshot. In a related embodiment, at least two, and more preferably, at least four receivers in the network are used for estimating and determining the second location information, and at least two, more preferably at least three additional receivers are deployed, strategically positioned to introduce larger inter-receiver distances optimal for determining or estimating the first location information as compared to the receiver distances optimal for estimating or determining the second location information.

In a preferred embodiment, said second plurality of receivers comprises or incorporates one or more receivers of said first plurality of receivers. Accordingly, said one or more receivers of the first plurality of receivers are multipurpose receivers. This way, the number of receivers used for carrying out the method can be reduced.

Geolocation techniques employing satellites (e. g. Low Earth Orbit, LEO, satellites or Medium Earth Orbit, MEO, satellites) are generally preferred over land, air, or sea-based systems since they can offer global coverage and continuous surveillance. Furthermore, the localization of the emitter is possible without trespassing onto foreign territory. Accordingly, in a preferred embodiment, one or more receivers of the first plurality of receivers are satellites. Additionally, or alternatively, one or more receivers of the second plurality of the receivers are satellites. In a related embodiment, the satellites are LEO satellites. In yet another embodiment, the satellites are MEO satellites.

According to a further aspect of the invention, a system for locating an emitter of an electromagnetic signal is provided. Said system comprises a first plurality of receivers and a second plurality of receivers, wherein the system is configured to receive said signal emitted by the emitter at two or more receivers of said first plurality of receivers, estimate and determine a first location information which delineates a region in which the emitter is located, wherein the first location information is estimated or determined based on assessing or utilizing a propagation effect of the signal, receive said signal emitted by the emitter at two or more receivers of said second plurality of receivers, estimate or determine a second location information, based on an assessment of a direction in which the signal is received at said two or more receivers of said second plurality of receivers, wherein said second location information comprises a set or distribution of possible locations of the emitter, estimate or determine a location of the emitter based on a combination of the first location information and the second location information, and provide information on the estimated or determined location of the emitter to a user device or database.

Accordingly, the system may be configured to connect to and to work with an already available use device or database. Additionally, or alternatively, the system may include the user device or database. Accordingly, in a preferred embodiment, the system further comprises the user device or database.

Note that said user device or database generally is a device which is configured to store the provided information or data, to process the provided information or data, and/or to display the provided information or data to a user. Additionally, or alternatively, the user device or database may be configured to store metadata or a log of the estimation or determination of the emitter's location. Said metadata or log may be included in the information provided by the system to the user device or database. In a preferred embodiment, the user device or database is a mobile device or an handheld device. In a further embodiment, the user device or database can be or can be a part of a stationary device such as a desktop PC, a surveillance station, or a server configured to store the information on the estimated or determined location of the emitter. The user device or database may be located on the ground, on an aircraft, or on a seacraft. Additionally, or alternatively, the user device or database may be, may be a part of, or may comprise an on-board processing unit.

In preferred embodiments, the system comprises additional features as described above regarding the method.

Particularly, in a preferred embodiment, said two or more receivers of said first plurality of receivers are configured to use Time Difference of Arrival, TDOA, localization to estimate or determine the first location information. Accordingly, in a preferred embodiment, the two or more receivers of the first plurality of receivers comprise high-precision time keeping equipment such as atomic clocks or quartz crystal oscillators, network time servers, chronometers, and/or precision time protocol (PTP) devices to maintain precise time synchronization in the TDOA localization.

In a preferred embodiment, said two or more receivers of said first plurality of receivers are configured to use Frequency Difference of Arrival, FDOA, localization to estimate or determine the first location information.

In a preferred embodiment, said two or more receivers of said first plurality of receivers are configured to use combined TDOA localization and FDOA localization to estimate or determine the first location information.

In a preferred embodiment, said two or more receivers of said second plurality of receivers are configured to use Angle of Arrival, AOA, localization to estimate or determine the second location information. Accordingly, in a preferred embodiment, the two or more receivers of the second plurality of receivers include single antennas (e. g. movable or rotatable antennas) or antenna arrays that measure signal angles through phase and amplitude differences, cameras or stereo vision systems that determine the angle of visual cues, and/or magnetometers that measure electromagnetic field orientation.

In a preferred embodiment, said first location information comprises a location parameter and an error margin parameter.

In a preferred embodiment, said two or more receivers of said second plurality of receivers are positioned according to the error margin parameter.

In a preferred embodiment, said two or more receivers of said second plurality of receivers are positioned away from each other at a maximum distance estimated or determined as a function of the error margin parameter. Thereby, the accuracy for determining the second location information can be enhanced or optimized.

In a preferred embodiment, said maximum distance is estimated or determined by dividing the wavelength of the signal divided by the sine of the error margin parameter. Accordingly, in a related embodiment, the inter-receiver distance $l_1$ between the two or more receivers of the second plurality of receivers fulfills Equation 15 as set out above.

In a preferred embodiment, said two or more receivers of said second plurality of receivers are more closely spaced than said two or more receivers of said first plurality of receivers. This way, the accuracy for estimating or determining the location of the emitter can be optimized.

In a preferred embodiment, said first plurality of receivers and said second plurality of receivers form a network of at least four receivers, preferably of at least seven receivers.

In a preferred embodiment, said second plurality of receivers comprises or incorporates one or more receivers of said first plurality of receivers.

In a preferred embodiment, said two or more receivers of said second plurality of receivers are spaced further apart than half of the wavelength of the signal. Accordingly, in a related embodiment, the inter-receiver distance $l_1$ between the two or more receivers of the second plurality of receivers fulfills Equation 16 as set out above, and more preferably, fulfills Equation 17 as set out above.

In a preferred embodiment, said first plurality of receivers is configured to move in formation.

In preferred embodiment, said second plurality of receivers is configured to move in formation.

In a preferred embodiment, both the first plurality of receivers and the second plurality of receivers are configured to move in formation. Accordingly, in a related embodiment, the first plurality of receivers and the second plurality of receivers form a network or array of receivers which are configured to move in formation with controlled receiver spacing, acceleration, velocity, and/or direction of movement.

In a preferred embodiment, said electromagnetic signal emitted by the emitter is a radio signal.

In a preferred embodiment, each receiver of said first plurality of receivers and of said second plurality of receivers comprises an antenna to receive, to detect, or to measure the signal emitted by the emitter.

In a preferred embodiment, one or more receivers of said first plurality of receivers are satellites.

In a preferred embodiment, one or more receivers of said second plurality of receivers are satellites.

In a related embodiment, said satellites are LEO satellites. In yet another embodiment, the satellites are MEO satellites.

According to a further aspect of the invention, a computer-readable storage medium is provided. Said computer-readable storage medium comprising instructions that, when read and executed by a processor, cause the processor to perform the above-described method for locating an emitter of an electromagnetic signal.

Accordingly, in its embodiments, the computer-readable storage medium comprises additional features as described above for the method.

SHORT DESCRIPTION OF THE FIGURES

Fig. 1    is a schematic illustration of a system according to an embodiment of the invention.

Fig. 2    is a schematic illustration of a system according to an embodiment of the invention.

Fig. 3    illustrates the impact of inter-receiver distance on the array factor resolution, wherein Fig.3(a) illustrates a scenario with an inter-receiver distance of $\lambda/2$, and Fig.3(b) illustrates a scenario with an inter-receiver distance of $10\lambda$.

Fig. 4    shows a spatial MUSIC spectrum as second location information in overlap with the delineated region of the first location information for a $2\times2$ array of receivers according to an embodiment of the invention.

Fig. 5    is a flow diagram illustrating a method for locating an emitter of an electromagnetic signal according to an embodiment of the invention.

Fig. 6    is a flow diagram illustrating a method for locating an emitter of an electromagnetic signal with a system shown in Fig. 1 according to an embodiment of the invention.

Fig. 7    is a table illustrating parameter boundary conditions for a generic application scenario of a system and method according to an embodiment of the invention.

Fig. 8    shows a performance evaluation of a location determination or estimation based on TDOA/FDOA in the scenario of Fig. 7.

Fig. 9    shows a performance evaluation of a location estimation or determination with a system and method according to an embodiment of the invention in the scenario of Fig. 7.

DESCRIPTION OF THE PREFERRED EMBODIMENT

It is to be understood that both the foregoing general description and the following description are exemplary and explanatory only and are not restrictive of the methods and devices described herein. In this application, the use of the singular may include the plural unless specifically state otherwise. Also, the use of "or" means "and/or" where applicable or unless stated otherwise. Those of ordinary skill in the art will realize that the following description is illustrative only and is not intended to be in any way limiting. Other embodiments will readily suggest themselves to such skilled persons having the benefit of this disclosure. Reference will now be made in detail to various implementations of the example embodiments as illustrated in the accompanying drawings.

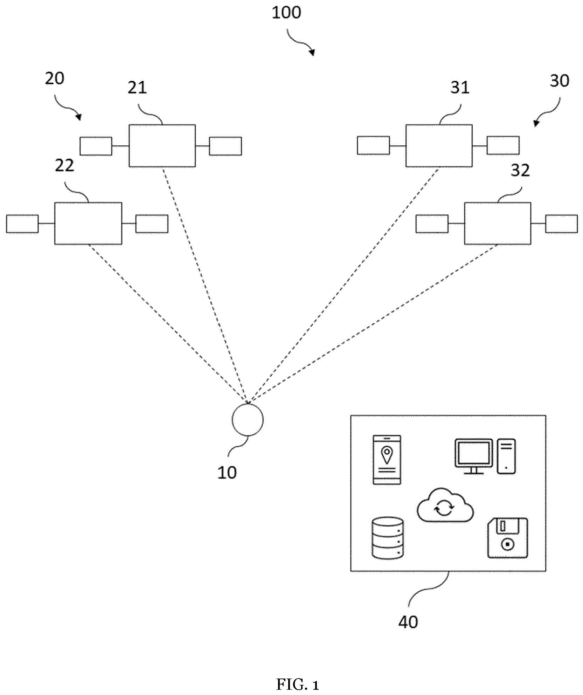

In Fig. 1 a system 100 for locating an emitter 10 of an electromagnetic signal is schematically illustrated. The system 100 comprises a first plurality of receivers 20 and a second plurality of receivers 30. In one embodiment, each of the receivers of the first plurality of receivers 20 and of the second plurality of receivers 30 are satellites (e. g. LEO or MEO satellites). The receivers may be linked for synchronization and data exchange. The processing may be performed on-board (e. g. in a distributed modality or by a master receiver). The calculations and signal recording may be performed by a software-defined radio (e. g. FPGA, ASICS, or microcontroller).

The system 100 is configured to (a) receive the signal emitted by the emitter 10 at a first receiver 21 and a second receiver 22 of the first plurality of receivers 20, (b) estimate and determine a first location information which delineates a region in which the emitter 10 is located, wherein the first location information is estimated or determined based on assessing or utilizing a propagation effect of the signal. For example, the first location information may be obtained by combined TDOA and FDOA localization. Accordingly, in an embodiment, the first receiver 21 and the second receiver 22 of the first plurality of receivers 20 are configured to use combined TDOA localization and FDOA localization to estimate or determine the first location information. The system 100 is further configured to (c) receive the signal at a first receiver 31 and a second receiver 32 of the second plurality of receivers 30, and (d) estimate or determine a second location information, based on an assessment of a direction in which the signal is received at the first and second receiver 31, 32 of the second plurality of receivers 30, wherein the second location information comprises a set or distribution of possible locations of the emitter 10. Accordingly, in one embodiment, the first receiver 31 and the second receiver 32 of the second plurality of receivers 30 are configured to use AOA localization to estimate or determine the second location information. Furthermore, the system 100 is configured to (e) estimate or determine a location of the emitter 10 based on a combination of the first location information and the second location information, and (f) provide information on the estimated or determined location of the emitter to a user device or database 40. As schematically depicted in Fig. 1, the user device or database 40 could be a mobile device or an handheld device, a stationary device such as a desktop PC, a cloud server, a disk, RAM, an integrated circuit, or any kind of device configured to process, to store, and/or to display the provided information on the estimated or determined location of the emitter. The user device or database could be located on the ground, on an aircraft, or on a seacraft. Additionally, or alternatively, the user device or database may comprise, may be, or may be part of an on-board processing unit for automatic data processing.

In the system 100 shown in Fig. 1, the first and second receiver 31, 32 of the second plurality of receivers 30 are spaced at a distance away from each other such that an increased accuracy in estimating or determining the region of the emitter's location is facilitated at the expense of the formation of grating lobes, which generates location ambiguity. The system 100 is capable of mitigating or resolving this ambiguity by combining the first location information and the second location information.

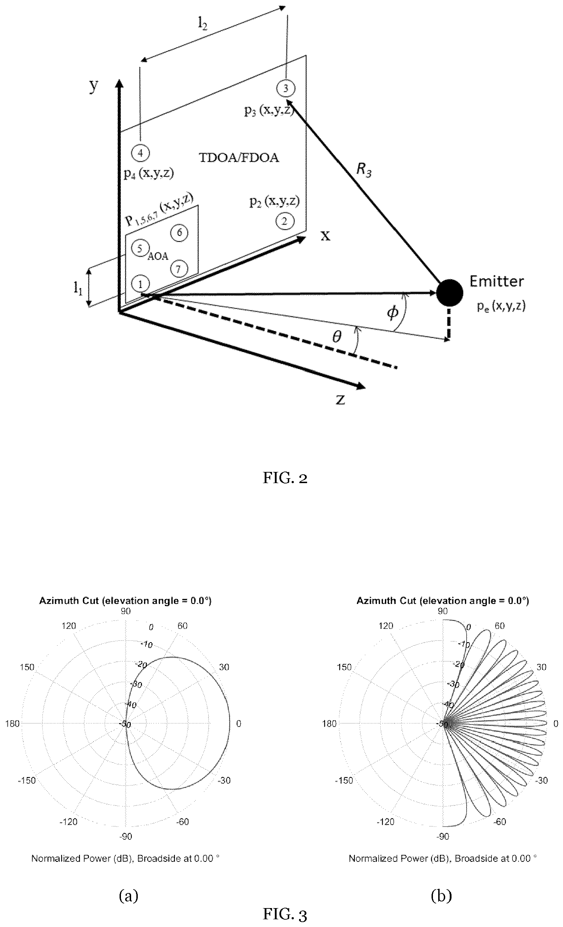

Fig. 2 shows a system similar to the system 100 of Fig 1, with the difference that the system of Fig. 2 comprises a total number of seven receivers. The receivers are denoted by circles with numbers 1 to 7 and have known locations $p_1$ to $p_7$ in a Cartesian coordinate system with x-, y-, and z-coordinates. The receivers 1 through 4 are arranged in a square and are spaced apart from each other by inter-receiver distance $l_2$. In the example, the receivers 1, 2, 3, and 4 form the first plurality of receivers 20 and are configured for combined TDOA and FDOA localization to estimate or determine the first location information. The distance $R_3$ between the emitter and the receiver 3 is exemplarily shown in Fig. 2. Using a formation of four receivers with substantial inter-receiver separations (e. g. spanning several tens of kilometers) allows forming a large receiver aperture. In this configuration, a narrow main beam can be generated, effectively enhancing the accuracy of the predefined solution space for TDOA/FDOA localization.

In an embodiment, the receivers 1, 5, 6, and 7 form the second plurality of receivers 30 and are configured for AOA localization to estimate or determine the second location information. Accordingly, in the embodiment, the receiver 1 is comprised in both the first plurality of receivers 20 and the second plurality of receivers 30. The azimuth angle $\theta$ and the elevation angle $\phi$ from the viewpoint of receiver 1 towards the emitter 10 are exemplarily shown in Fig. 2. The optimal inter-receiver distance for AOA localization estimation differs from that for TDOA/FDOA localization. Hence, the receivers 1, 5, 6, and 7 arranged in a square and are spaced apart from each other by distance $l_1$. As shown in the example in Fig. 2, the inter-receiver distance $l_1$ of the second plurality of receivers 30 is smaller than the inter-receiver distance $l_2$ of the first plurality of receivers 20.

Overall, according to an embodiment, the receivers 1 to 7 form a two-dimensionally spaced network of receivers. Similar to the system 100 of Fig. 1, the system shown in Fig. 2 is configured to estimate or determine the location of the emitter 10 (e. g. the location vector $\boldsymbol{p_e}$) based on a combination of the first location information and the second location information, and to provide information on the estimated or determined location of the emitter 10 to a user device 40 (not shown in Fig. 2).

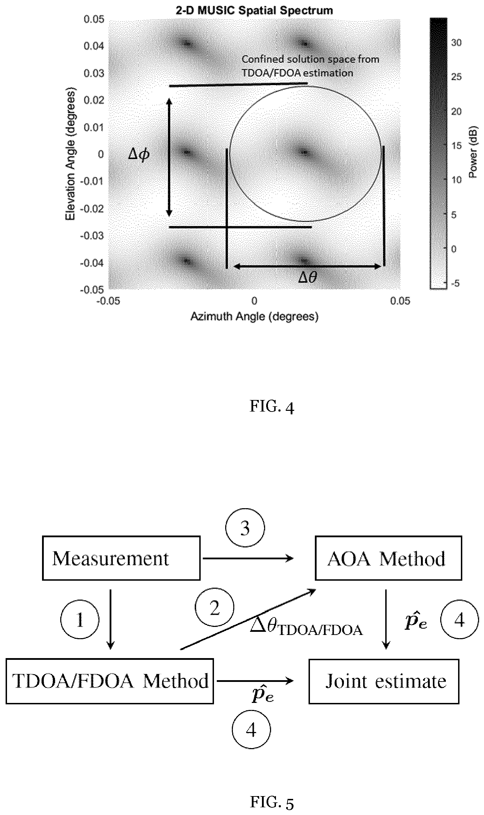

Fig. 3 illustrates the impact of varying inter-receiver distances $l_1$ in the second plurality of receivers 30 on array factors for a signal with a frequency $f$ of 400 MHz, wherein Fig.3(a) illustrates the array factor resolution for a scenario in which the inter-receiver distance $l_1$ in the second plurality of receivers 30 is half the wavelength, i. e. $l_1 = \lambda/2$, of the signal, and Fig. 3(b) illustrates the array factor resolution for a scenario in which the inter-receiver distance $l_1$ in the second plurality of receivers 30 is ten times the wavelength, i. e. $l_1 = 10\lambda$, of the signal. Fig. 3 demonstrates that increasing the distance $l_1$ between receivers 1, 5, 6, and 7 of the second plurality of receivers 30 leads to a notable improvement in resolution, resulting in enhanced precision for determining the possible locations of the emitter 10. However, this resolution gain introduces a challenging issue: the formation of multiple grating lobes, which in turn generates location ambiguity. This ambiguity is mitigated by the system shown in Fig. 2 by combining the first location information and the second location information as is illustrated in Fig. 4.

Fig. 4 shows a spatial Multiple Signal Classification (MUSIC) spectrum as result of an estimated or determined second location information for a $2\times2$ array of receivers similar to the receivers 1, 5, 6, and 7 of the system shown in Fig. 2. The MUSIC algorithm is a technique for AOA location estimation or determination. The performance of the AOA localization improves as the receiver distance $l_1$ increases. However, the presence of grating lobes, as shown in Figure 3, introduces angle ambiguity, resulting in non-unique solutions. Consequently, each dot of the multiple dots visible in the spatial MUSIC spectrum represents a potential solution, i. e. a possible location of the emitter 10, due to the sparsity of the array and an inter-receiver distance $l_1$ larger than half of the wavelength.

According to an embodiment, the first location information can be obtained from an initial TDOA and/or FDOA localization and comprises a location parameter $\vartheta_e$ as defined in Equation 12 and an error margin parameter $\Delta\vartheta_e$ as defined in Equation 14 above, wherein the error margin parameter $\Delta\vartheta_e$ comprises the component $\Delta\theta_{TDOA/FDOA}$ as error margin for the azimuth angle and the component $\Delta\phi_{TDOA/FDOA}$ as error margin for the elevation angle. The location parameter $\vartheta_e$ and the error margin parameter $\Delta\vartheta_e$ are passed on to the AOA localization, as is schematically illustrated for the component the $\Delta\theta_{TDOA/FDOA}$ in the flow diagram in Fig. 5. The region delineated by the first location information represented by the circle in Fig. 4 is overlapped with the spatial MUSIC spectrum. According to yet another embodiment, the delineated region can be defined as the location parameter $\vartheta_e \pm$ the error margin parameter $\Delta\vartheta_e$, and more precisely, as $\theta_{TDOA/FDOA} \pm \Delta\theta_{TDOA/FDOA}$ for the azimuth angle and $\phi_{TDOA/FDOA} \pm \Delta\phi_{TDOA/FDOA}$ for the elevation angle, e. g. similar to a rectangle depending on the overall geometry and orientation of the receiver formation and the emitter. The dot that lies within the delineated region or circle is selected and used to provide the estimated or determined location of the emitter 10.

Fig. 5 schematically illustrates a method according to an embodiment of the invention. Step (1) involves performing a location estimation based on TDOA/FDOA measurements. This estimation yields a confined search area or region the emitter 10 is likely to be located within. This confinement facilitates mitigating the risk of location ambiguity, as evident in the spatial MUSIC spectrum depicted in Fig. 4. In step (2), the location parameter and the error margin parameter, here exemplarily shown for the error margin or confinement parameter $\Delta\theta_{TDOA/FDOA}$ derived from the initial TDOA/FDOA location estimation in step (1), are passed on to the AOA localization carried out in step (3). The parameters serve as guidance for the AOA estimation process which is indicated as the circle in the spatial MUSIC spectrum in Fig. 4. Step (3) involves high-resolution estimation facilitated by a large aperture receiver array. In yet a further embodiment, the inter-receiver distance, denoted as $l_1$, can be set smaller or equal to the value defined in Equation 15 in order to achieve high-resolution performance. The estimations obtained from both the TDOA/FDOA and AOA localization are combined in step (4) to provide the estimated or determined location of the emitter 10. In step (5), which is not shown in Fig. 5, information on the estimated or determined location of the emitter 10 is then provide to a user device 40 for further processing. For example, the provided information may be used to deploy a rescue unit or an interception unit.

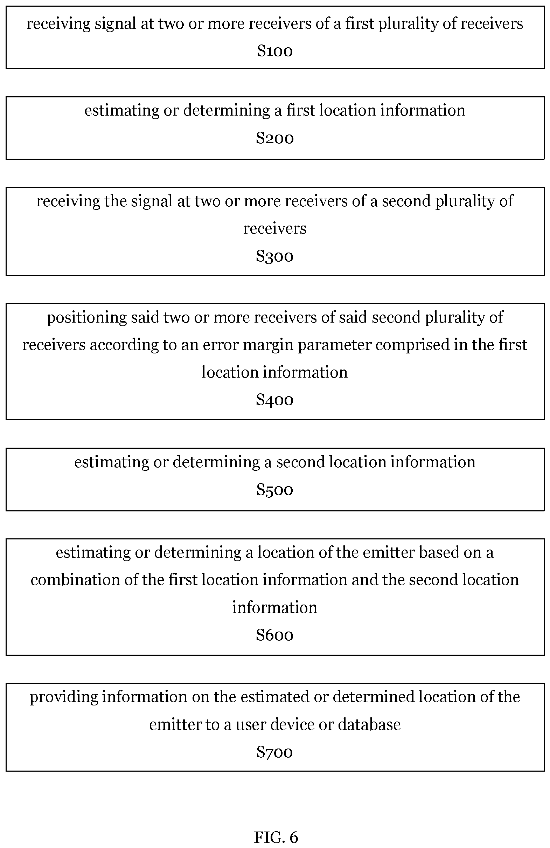

Fig. 6 schematically illustrates a method for locating an emitter 10 of an electromagnetic signal with an exemplary system as shown in Fig. 1. The method comprises the following steps:

Step S100: receiving an electromagnetic signal emitted by the emitter 10 at the first and second receiver 21, 22 of the first plurality of receivers 20;

Step S200: estimating or determining a first location information which delineates a region in which the emitter 10 is located, wherein the first location information is estimated or determined based on assessing or utilizing a propagation effect of the signal;

Step S300: receiving the signal at the first and second receiver 31, 32 of the second plurality of receivers 30;

Step S400: positioning said first and second receiver 31, 32 of said second plurality of receivers 30 according to the error margin parameter $\Delta\vartheta_e$, $\Delta\theta_{TDOA/FDOA}$, $\Delta\phi_{TDOA/FDOA}$, which can, for example, be obtained by Equation 14. In particular, in a related embodiment, said first and second receiver 31, 32 of said second plurality of receivers 30 are positioned away from each other at a maximum distance $l_1$ estimated or determined as a function of the error margin parameter $\Delta\vartheta_e$, $\Delta\theta_{TDOA/FDOA}$, $\Delta\phi_{FDOA/FDOA}$, for example, obtain by Equation 15;

Step S500: estimating or determining a second location information, based on an assessment of a direction in which the signal is received at said first and second receiver 31, 32 of said second plurality of receivers 30, wherein said second location information comprises a set or distribution of possible locations of the emitter 10;

Step S600: estimating or determining a location of the emitter 10 based on a combination of the first location information and the second location information; and

Step S700: providing information on the estimated or determined location of the emitter 10 to the user device or database 40.

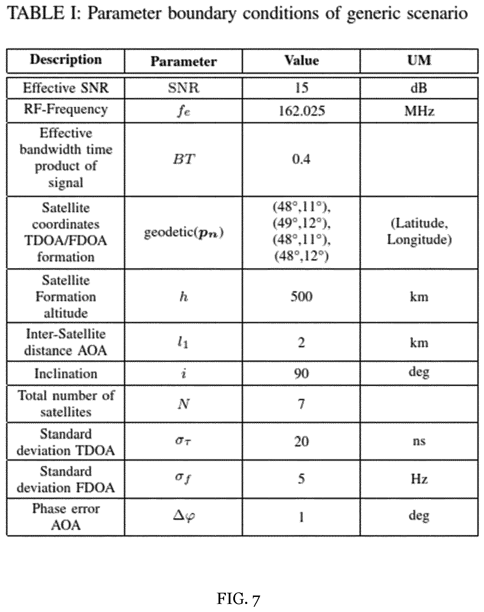

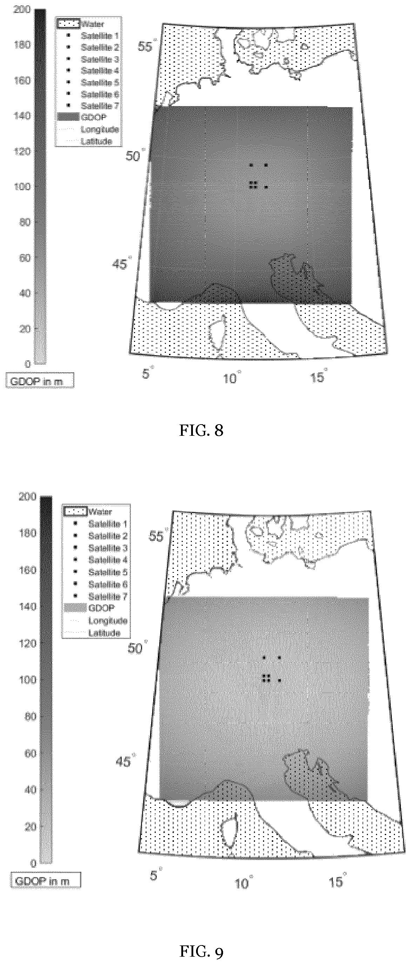

Fig. 7 is a table illustrating parameter boundary conditions for a generic Automatic-Identification-System (AIS) signal scenario in application of an exemplary system as shown in Fig. 2. The parameter boundary conditions shown in Fig. 7 are used for a performance evaluation of the system and the results therefrom are represented in Fig. 8 and Fig. 9.

In the generic scenario, the center frequency $f_e$ of the received radio frequency (RF)-signal is 162.025 MHz. The SNR is 15 dB, which is based on the HawkEye 360 assumptions as described in Timothy O'Shea et al., Geolocation of RF Emitters with a Formation-Flying Cluster of Three Microsatellites, Small Satellite Conference, 2016, and which leads to a unit-less "effective bandwidth time product of signal" or "Time-Frequency Bandwidth" (e. g. *BT* as used in Equations 4 and 5 above) of 0.4. Four satellites are used as receivers 1,2,3,4 for TDOA/FDOA localization with the given Latitude and Longitude positions. They are positioned in an altitude of 500 km. The inter-receiver distance $l_1$ of the four receivers 1,5,6,7 used for AOA localization is 2 km. Receiver 1 is used for both TDOA/FDOA and AOA localization which leads to a total number of $N = 7$ receivers. The first noise parameter $\sigma_\tau$ associated with the time of arrival $\tau$ is 20 ns, the second noise parameter $\sigma_\upsilon$ associated with the Doppler shift in frequency $\upsilon$ is 5 Hz. To evaluate the location estimation results, the Geometric Dilution Precision, GDOP, for the location of the emitter $\boldsymbol{p_e}$ is used as performance metrics and is based the variances derived from the obtained CRLBs. In an embodiment, the GDOP can be defined by the following Equation 18,

[Equation 18]

$$\mathrm{GDOP}(\boldsymbol{p}_\mathrm{e}) = \sqrt{\sigma_{x_\mathrm{e}}^2 + \sigma_{y_\mathrm{e}}^2 + \sigma_{z_\mathrm{e}}^2},$$

wherein the individual standard deviations - achieved by an unbiased estimator denotated as $\sigma_{\boldsymbol{pe}}$ - are lower bound by the derived CRLBs.

Fig. 8 shows the performance evaluation of the CRLB analysis for various emitter locations obtained with TDOA/FDOA localization (only). In Fig. 8, the GDOP ranges between 60 and 200 meters. This error translates to $\theta_\mathrm{TDOA/FDOA}$, which defines the angle boundary (e. g. given by Equation 14) and determines the distance requirement $l_1$ (e.g. as expressed in Equation 15) for the ultra-wide baseline interferometer used in AOA localization. In the performance evaluation, the phase error of the AOA localization is related to the angle error and is estimated or determined as a function of the inter-receiver distance $l_1$ of the second plurality of receivers and a phase error arising from imperfect synchronization between receivers and the presence of noise sources such as interferences or thermal noise. As example, the phase error of the AOA localization for the azimuth angle $\theta$ can be expressed with the following Equation 19,

[Equation 19]

$$\Delta\theta_\mathrm{AOA} = \arcsin\left(\frac{\Delta\varphi\,\lambda}{2\pi l_1}\right),$$

wherein $l_1$ is the inter-receiver distance of the receivers 1,5,6,7 used for AOA localization, and the variable $\Delta\varphi$ represents the phase error arising from imperfect synchronization between receivers and the presence of noise sources such as interferences or thermal noise. In the present example, a phase error $\Delta\varphi = 1°$ is utilized. Note that this dependency of the phase error of the AOA localization, in particular Equation 19, demonstrates the reduction in sensitivity of the angle error to phase errors as the receivers 1,5,6,7 are positioned at larger distances from each other. Hence, this characteristic is a significant design factor for the system.

The performance of the hybrid approach, i. e. use of the combination of the first location information obtained from TDOA/FDOA localization and the second location information obtained from AOA localization, is shown in Fig. 9. When comparing the results from Fig. 8 and Fig. 9, a significant improvement is observed, with the error approximately reduced by half.

The utilization of strategically positioned receivers, for example, in a system as shown in Fig. 2, enables accurate TDOA and FDOA estimation, while larger inter-receiver distances provide narrower beam coverage and improved localization accuracy in all three dimensions without cross-track, latitude, or longitudinal symmetry. As shown for the embodiment in Fig. 2, the configuration of the system facilitates accurate location estimation or determination by leveraging the benefits of spatial diversity. To mitigate phase ambiguity, in the specific example, three additional satellites are strategically incorporated to enhance AOA localization using the TDOA/FDOA localization results. By combining the measurements from multiple receivers with different baselines, the system as shown in Fig. 2 exhibits improved resolution and accuracy in angle estimation or determination, effectively mitigating the impact of phase errors.

Overall, current investigations of the inventors (as exemplified in Fig. 8 and Fig. 9) show that by exploiting the synergistic effects of TDOA, FDOA, and AOA localization as presented herein, an enhanced precision and reliability in locating an emitter of an electromagnetic signal can be achieved. The performance evaluation of the simulations presented in Fig. 8 and Fig. 9 demonstrate the effectiveness of the hybrid approach according to the methods and systems of the present disclosure. The integration of TDOA, FDOA, and AOA techniques in a distributed receiver system configuration, as exemplarily shown in Fig. 2, may offer a significant improvement in location accuracy compared to existing methods. Furthermore, the analysis of signal observation time, signal power, and maximum allowable inter-receiver distance reveal design parameters that impact location accuracy and ambiguity. By optimizing these parameters, the methods and system as demonstrated herein can maximize accuracy while minimizing potential ambiguity in the estimation or determination process.

While the present invention has been described in terms of specific embodiments, it is understood that variations and modifications will occur to those in the art, all of which are intended as aspects of the present invention. Accordingly, only such limitations as appear in the claims should be placed on the invention.

**Claims**

1. A method for locating an emitter (10) of an electromagnetic signal, comprising the following steps:

   receiving said signal emitted by the emitter at two or more receivers (21, 22) of a first plurality of receivers (20);
   estimating or determining a first location information which delineates a region in which the emitter (10) is located, wherein the first location information is estimated or determined based on assessing or utilizing a propagation effect of the signal;
   receiving said signal emitted by the emitter at two or more receivers (31, 32) of a second plurality of receivers (30);
   estimating or determining a second location information, based on an assessment of a direction in which the signal is received at said two or more receivers (31, 32) of said second plurality of receivers (30), wherein said second location information comprises a set or distribution of possible locations of the emitter (10);
   estimating or determining a location of the emitter based on a combination of the first location information and the second location information; and
   providing information on the estimated or determined location of the emitter to a user device or database (40).

2. The method of claim 1,

   wherein said first location information is estimated or determined based on a difference in propagation time and/or phase of the signal received at said two or more receivers (21, 22) of said first plurality of receivers (20); and/or
   wherein said first location information is estimated or determined as a function of a difference in time of arrival and/or Doppler shift in frequency of the signal received at said two or more receivers (21, 22) of said first plurality of receivers (20).

3. The method of claim 1 or 2,

   wherein said first location information is estimated or determined by use of Time Difference of Arrival, TDOA, localization; and/or
   wherein said first location information is estimated or determined by use of Frequency Difference of Arrival, FDOA, localization; and/or
   wherein said first location information is estimated or determined by use of combined TDOA localization and FDOA localization; and/or
   wherein said second location information is estimated or determined by use of Angle of Arrival, AOA, localization.

4. The method of claim 1, 2 or 3, wherein said first location information comprises a location parameter ($\vartheta$, $\theta_{TDOA/FDOA}$,

$\phi_{\text{TDOA/FDOA}}$) and an error margin parameter ($\Delta\vartheta$, $\Delta\theta_{\text{TDOA/FDOA}}$, $\Delta\phi_{\text{TDOA/FDOA}}$),

wherein preferably said error margin parameter ($\Delta\vartheta$, $\Delta\theta_{\text{TDOA/FDOA}}$, $\Delta\phi_{\text{TDOA/FDOA}}$) is estimated or determined as a function of a difference in time of arrival ($\tau$) and a therewith associated first noise parameter ($\sigma_\tau$) of the signal received at said two or more receivers (21, 22) of said first plurality of receivers (20), and/or wherein preferably said error margin parameter ($\Delta\vartheta$, $\Delta\theta_{\text{TDOA/FDOA}}$, $\Delta\phi_{\text{TDOA/FDOA}}$) is estimated or determined as a function of a Doppler shift in frequency (v) and a therewith associated second noise parameter ($\sigma_\upsilon$) of the signal received at said two or more receivers (21, 22) of said first plurality of receivers (20), wherein preferably said error margin parameter ($\Delta\vartheta$, $\Delta\theta_{\text{TDOA/FDOA}}$, $\Delta\phi_{\text{TDOA/FDOA}}$) is estimated or determined as a function of the first noise parameter ($\sigma_\tau$), the second noise parameter ($\sigma_\upsilon$), the difference in time of arrival ($\tau$), and the Doppler shift in frequency ($\upsilon$) of the signal received at said two or more receivers (21, 22) of said first plurality of receivers (20); and/or wherein preferably said error margin parameter ($\Delta\vartheta$, $\Delta\theta_{\text{TDOA/FDOA}}$, $\Delta\phi_{\text{TDOA/FDOA}}$) is estimated or determined based on or utilizing Cramer-Rao Lower Bound, CRLB, analysis.

5. The method of claim 4, further comprising, before the step of estimating or determining said second location information, positioning said two or more receivers (31, 32) of said second plurality of receivers (30) according to the error margin parameter ($\Delta\vartheta$, $\Delta\theta_{\text{TDOA/FDOA}}$, $\Delta\phi_{\text{TDOA/FDOA}}$), and/or wherein said two or more receivers (31, 32) of said second plurality of receivers (30) are positioned away from each other at a maximum distance ($l_1$) estimated or determined as a function of the error margin parameter ($\Delta\vartheta$, $\Delta\theta_{\text{TDOA/FDOA}}$, $\Delta\phi_{\text{TDOA/FDOA}}$), wherein preferably said maximum distance ($l_1$) is estimated or determined by dividing the wavelength of the signal by the sine of the error margin parameter ($\Delta\vartheta$, $\Delta\theta_{\text{TDOA/FDOA}}$, $\Delta\phi_{\text{TDOA/FDOA}}$).

6. The method of one of the preceding claims,
wherein said first plurality of receivers (20) and said second plurality of receivers (30) form a network of at least four receivers, preferably of at least seven receivers; and/or wherein said second plurality of receivers (30) comprises or incorporates one or more receivers of said first plurality of receivers (20).

7. The method of one of the preceding claims, wherein said two or more receivers (31, 32) of said second plurality of receivers (30) are spaced further apart than half of the wavelength of the signal.

8. The method of one of the preceding claims, wherein said first plurality of receivers (20) moves in formation and/or wherein said second plurality of receivers (30) moves in formation.

9. A system for locating an emitter (10) of an electromagnetic signal, the system comprising a first plurality of receivers (20) and a second plurality of receivers (30), wherein the system is configured to

receive said signal emitted by the emitter at two or more receivers (21, 22) of said first plurality of receivers (20); estimate and determine a first location information which delineates a region in which the emitter (10) is located, wherein the first location information is estimated or determined based on assessing or utilizing a propagation effect of the signal; receive said signal emitted by the emitter at two or more receivers (31, 32) of said second plurality of receivers (30);
estimate or determine a second location information, based on an assessment of a direction in which the signal is received at said two or more receivers (31, 32) of said second plurality of receivers (30), wherein said second location information comprises a set or distribution of possible locations of the emitter (10);
estimate or determine a location of the emitter based on a combination of the first location information and the second location information; and
provide information on the estimated or determined location of the emitter to a user device or database (40).

10. The system of claim 9,

wherein said two or more receivers (21, 22) of said first plurality of receivers (20) are configured to use Time Difference of Arrival, TDOA, localization to estimate or determine the first location information; and /or wherein said two or more receivers (21, 22) of said first plurality of receivers (20) are configured to use Frequency Difference of Arrival, FDOA, localization to estimate or determine the first location information; and/or wherein said two or more receivers (21, 22) of said first plurality of receivers (20) are configured to use combined TDOA localization and FDOA localization to estimate or determine the first location information; and/or wherein said two or more receivers (31, 32) of said second plurality of receivers (30) are configured to use Angle of Arrival, AOA, localization to estimate or determine the second location information.

11. The system of claim 9 or 10, wherein said first location information comprises a location parameter ($\vartheta$, $\theta_{\text{TDOA/FDOA}}$, $\phi_{\text{TDOA/FDOA}}$) and an error margin parameter ($\Delta\vartheta$, $\Delta\theta_{\text{TDOA/FDOA}}$, $\Delta\phi_{\text{TDOA/FDOA}}$), wherein preferably said two or more receivers (31, 32) of said second plurality of receivers (30) are positioned according to the error margin parameter ($\Delta\vartheta$, $\Delta\theta_{\text{TDOA/FDOA}}$, $\Delta\phi_{\text{TDOA/FDOA}}$), and/or wherein preferably said two or more receivers (31, 32) of said second plurality of receivers (30) are positioned away from each other at a maximum distance estimated or determined as a function of the error margin parameter ($\Delta\vartheta$, $\Delta\theta_{\text{TDOA/FDOA}}$, $\Delta\phi_{\text{TDOA/FDOA}}$), wherein preferably said maximum distance is estimated or determined by dividing the wavelength of the signal divided by the sine of the error margin parameter ($\Delta\vartheta$, $\Delta\theta_{\text{TDOA/FDOA}}$, $\Delta\phi_{\text{TDOA/FDOA}}$).

12. The system of claim 9, 10 or 11,
wherein said first plurality of receivers (20) and said second plurality of receivers (30) form a network of at least four receivers, preferably of at least seven receivers; and/or wherein said second plurality of receivers (30) comprises or incorporates one or more receivers of said first plurality of receivers (20).

13. The system of any of claims 9 to 12, wherein said two or more receivers (31, 32) of said second plurality of receivers (30) are spaced further apart than half of the wavelength of the signal.

14. The system of any of claims 9 to 13,

wherein said first plurality of receivers (20) is configured to move in formation; and/or
wherein said second plurality of receivers (30) is configured to move in formation; and/or
wherein said electromagnetic signal emitted by the emitter (10) is a radio signal; and/or
wherein each receiver of said first plurality of receivers (20) and of said second plurality of receivers (30) comprises an antenna to receive, to detect, or to measure the signal emitted by the emitter (10); and/or
wherein one or more receivers of said first plurality of receivers (20) are satellites and/or one or more receivers of said second plurality of receivers (30) are satellites,
wherein preferably said satellites are Low Earth Orbit, LEO, satellites or Medium Earth Orbit, MEO, satellites.

15. A computer-readable storage medium comprising instructions that, when read and executed by a processor, cause the processor to perform a method for locating an emitter (10) of an electromagnetic signal according to any of claims 1 to 8.

FIG. 1

FIG. 2

Azimuth Cut (elevation angle = 0.0°)

Normalized Power (dB), Broadside at 0.00 °

(a)

Azimuth Cut (elevation angle = 0.0°)

Normalized Power (dB), Broadside at 0.00 °

(b)

FIG. 3

FIG. 4

FIG. 5

receiving signal at two or more receivers of a first plurality of receivers

S100

estimating or determining a first location information

S200

receiving the signal at two or more receivers of a second plurality of receivers

S300

positioning said two or more receivers of said second plurality of receivers according to an error margin parameter comprised in the first location information

S400

estimating or determining a second location information

S500

estimating or determining a location of the emitter based on a combination of the first location information and the second location information

S600

providing information on the estimated or determined location of the emitter to a user device or database

S700

FIG. 6

TABLE I: Parameter boundary conditions of generic scenario

| Description | Parameter | Value | UM |
|---|---|---|---|
| Effective SNR | SNR | 15 | dB |
| RF-Frequency | $f_c$ | 162.025 | MHz |
| Effective bandwidth time product of signal | $BT$ | 0.4 | |
| Satellite coordinates TDOA/FDOA formation | geodetic($\boldsymbol{p_n}$) | (48°,11°), (49°,12°), (48°,11°), (48°,12°) | (Latitude, Longitude) |
| Satellite Formation altitude | $h$ | 500 | km |
| Inter-Satellite distance AOA | $l_1$ | 2 | km |
| Inclination | $i$ | 90 | deg |
| Total number of satellites | $N$ | 7 | |
| Standard deviation TDOA | $\sigma_\tau$ | 20 | ns |
| Standard deviation FDOA | $\sigma_f$ | 5 | Hz |
| Phase error AOA | $\Delta\varphi$ | 1 | deg |

FIG. 7

FIG. 8

FIG. 9

European Patent Office
Office européen des brevets
Europäisches Patentamt

# EUROPEAN SEARCH REPORT

**Application Number**

EP 23 20 6463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 733 338 B1 (KUO LISA [US] ET AL) 15 August 2017 (2017-08-15) | 1-4,6, 8-10,12, 14,15 | INV. G01S5/02 |
| A | * figures 1-5 * <br> * column 1, lines 43-54 * <br> * column 2, line 64 - column 4, line 49 * <br> * column 5, lines 32-48 * <br> * column 6, lines 24-29 * <br> ----- | 5,7,11, 13 | ADD. G01S5/12 |
| X | ALEX MIKHALEV ET AL: "Passive emitter geolocation using agent-based data fusion of AOA, TDOA and FDOA measurements", INFORMATION FUSION, 2007 10TH INTERNATIONAL CONFERENCE ON, IEEE, PI, 1 July 2007 (2007-07-01), pages 1-6, XP031194018, ISBN: 978-0-662-45804-3 | 1-4,6, 8-10,12, 14,15 | |
| A | * figures 1-3, 5, 6 * <br> * page 1; Abstract; I. Introduction; page 1-3; section B. Angle of arrival - section D. Frequency difference of arrival; page 4; section III. Fusion of AOA AND TDOA with FDOA measurements * <br> ----- | 5,7,11, 13 | |
| X | US 5 914 687 A (ROSE CONRAD M [US]) 22 June 1999 (1999-06-22) | 1-4,6, 8-10,12, 14,15 | |
| A | * claims 1, 2 * <br> * column 3, lines 41-53 * <br> ----- | 5,7,11, 13 | |

**TECHNICAL FIELDS SEARCHED (IPC)**

G01S

-/--

The present search report has been drawn up for all claims

| Place of search | Date of completion of the search | Examiner |
|---|---|---|
| Munich | 9 April 2024 | Krummenacker, Benoît |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

# EUROPEAN SEARCH REPORT

Application Number

EP 23 20 6463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | FOWLER M L ET AL: "Signal models for TDOA/FDOA estimation", IEEE TRANSACTIONS ON AEROSPACE AND ELECTRONIC SYSTEMS, IEEE SERVICE CENTER, PISCATAWAY, NJ, US, vol. 44, no. 4, 1 October 2008 (2008-10-01), pages 1543-1550, XP011248825, ISSN: 0018-9251 * the whole document * ----- | 4 | |
| A,D | S. STEIN: "Algorithms for ambiguity function processing", IEEE TRANSACTIONS ON ACOUSTICS, SPEECH, AND SIGNAL PROCESSING,, vol. 29, no. 3, 1981, pages 588-599, XP002811318, * the whole document * ----- | 4 | |
| A,D | TIMOTHY O'SHEA ET AL.: "Geolocation of RF Emitters with a Formation-Flying Cluster of Three Microsatellites", SMALL SATELLITE CONFERENCE, 2016, XP002811319, * the whole document * ----- | 4 | TECHNICAL FIELDS SEARCHED (IPC) |

The present search report has been drawn up for all claims

| Place of search | Date of completion of the search | Examiner |
|---|---|---|
| Munich | 9 April 2024 | Krummenacker, Benoît |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 23 20 6463

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2024

| Patent document cited in search report | Publication date | Patent family member(s) | Publication date |
|---|---|---|---|
| US 9733338 B1 | 15-08-2017 | NONE | |
| US 5914687 A | 22-06-1999 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ABULASAD ELGAMOUDI et al.** A Survey for Recent Techniques and Algorithms of Geolocation and Target Tracking in Wireless and Satellite Systems. *Applied Sciences*, 2021, vol. 11 (13), 6079
- **YANG ZHENG BIN et al.** Passive satellite localization using TDOA/FDOA/AOA measurements. *IEEE Conference Anthology*, 2013, 1-5
- **MARK L. FOWLER ; XI HU**. Signal models for TDOA/FDOA estimation. *IEEE Transactions on Aerospace and Electronic Systems*, 2008, vol. 44 (4), 1543-1550
- **S. STEIN**. Differential delay/Doppler ML estimation with unknown signals. *IEEE Transactions on Signal Processing*, 1993, vol. 41 (8), 2717-2719
- **S. STEIN**. Algorithms for ambiguity function processing.. *IEEE Transactions on Acoustics, Speech, and Signal Processing*, 1981, vol. 29 (3), 588-599
- **F. GUO**. Space Electronic Reconnaissance: Localization Theories and Methods. Wiley, 2014
- **TIMOTHY O'SHEA et al.** Geolocation of RF Emitters with a Formation-Flying Cluster of Three Microsatellites. *Small Satellite Conference*, 2016